# EUROPÄISCHE PATENTSCHRIFT

(11) **EP 1 437 537 B1**
(45) Veröffentlichungstag und Bekanntmachung des Hinweises auf die Patenterteilung: **21.06.2006**
(21) Anmeldenummer: 03027983.0
(22) Anmeldetag: 05.12.2003
(51) Int. Cl.: F16J 15/34

(54) **Laufwerkdichtung**
Drive sealing
Joint d'étanchéité pour dispositif d'entraînement

(30) Priorität: 10.01.2003 DE 10300567
(43) Veröffentlichungstag der Anmeldung: 14.07.2004
(73) Patentinhaber: Federal-Mogul Friedberg GmbH, 86316 Friedberg (DE)
(72) Erfinder: Buchmann, Michael, 86438 Kissing (DE); Zutz, Hans-Henning, 42929 Wermelskirchen (DE); Wittka, Peter, 86438 Kissing (DE)

(56) Entgegenhaltungen:
- US-A- 3 086 782
- US-A- 4 503 093

## Beschreibung

Die Erfindung betrifft eine Laufwerkdichtung, bestehend aus einem metallischen Gleit- und/oder Gegenring, der im Bereich seiner Lauffläche mit einer Verschleißschutzschicht versehen ist, die durch eine thermisch aufgespritzte Hartstoffschicht gebildet ist, und die Hartstoffschicht Oxydkeramihen, cermets und/oder Hartmetalle beinhaltet.

Durch die US-A 4,505,485 ist eine Laufwerkdichtung bekannt geworden, deren Lauffläche zumindest partiell mit einer Verschleißschutzschicht überzogen ist, dergestalt, dass auf der Lauffläche eine Chrom-, Wolfram-, Vanadium-, Titan-, Niob-, Kobalt-, Molybdän-Beschichtung, bedarfsweise in Kombination mit Carbiden oder Kohlenstoff, abgeschieden wird. Die Beschichtung wird in Form einer Spirale aufgebracht und durch Umschmelzen gehärtet.

In der US-A 3,086,782 wird eine aus abgewinkeltem Blech bestehende Laufwerkdichtung beschrieben, deren Laufflächen mit einer Verschleißschutzschicht überzogen sind. Die sehr dünn ausgebildete Verschleißschutzschicht soll im Anschluß an das Läppen der Laufflächen aufgebracht werden. Die Schicht eignet sich nur beschränk für den Einsatz als Laufwerkdichtung.

Der DE-C 197 00 835 ist eine Verbundschicht sowie ein Verfahren zum Bilden einer selbstschmierenden Verbundschicht und dadurch gebildete selbstschmierende Bauteile zu entnehmen. Das Pulvergemisch besteht aus 25 - 75 Vol.-% eines Carbid enthaltenden Keramikpulvers, zwischen 5 und 50 Vol.-% eines Metallpulvers, ausgewählt aus der Gruppe, die aus Nickel, Chrom und Kombinationen hieraus besteht und zwischen 2 und 25 Vol.-% eines Festschmierstoffpulvers, ausgewählt aus der Gruppe, die aus Molybdändisulfid, Bleioxyd, Silber und Titanoxid besteht. Die Verbundschicht wird mittels Hochgeschwindigkeitsflammspritzen auf das Bauteil aufgetragen, so dass sich eine selbstschmierende Schicht ergibt. Bevorzugte Anwendungsfälle sind Kolbenringe und Zylinderlaufbuchsen.

Heutige aus metallischen Werkstoffen bestehende Laufwerkdichtungen (insbesondere hochfeste carbidhaltige Gußwerkstoffe) müssen in kostenintensiver Weise im Bereich der Lauffläche durch Trapezschleifen, Honen oder dergleichen bearbeitet werden. Aufgebrachte Verschleißschutzschichten müssen einer weiteren Nachbearbeitung durch Schleifen, Polieren oder dergleichen unterzogen werden, um die nötige Dichtheit der Laufwerkdichtung im Betriebszustand sicherzustellen. Vielfach muß zur Erlangung der vorgegebenen tribologischen Eigenschaften ein Schmierstoff zugegeben werden.

Neben dieser aufwendigen Art der Bearbeitung sind diese Laufwerkdichtungen nur für geringere Drehzahlen einsetzbar.

Der Erfindung liegt die Aufgabe zugrunde, eine Verbesserung der tribologischen Betriebseigenschaften von Laufwerkdichtungen herbeizuführen, wobei gleichzeitig auch höhere Betriebsgeschwindigkeiten (Drehzahlen) realisiert werden sollen. Bei gleichzeitigem Einsatz preiswerter Grundwerkstoffe soll darüber hinaus die Nachbearbeitung der Laufflächen weitestgehend vermieden werden.

Diese Aufgabe wird erfindungsgemäß durch die Merkmale des Patentanspruch 1 gelöst. Vorteilhalfte Ausgestaltungen der Erfindung sind in den Unteransprüchen dargelegt. Die Hartstoffschicht basiert auf Materialien, wie Oxydkeramiken, Cermets und/oder Hartmetallen.

Die Gleitlackschicht wird beispielsweise gebildet durch PTFE- oder graphithaltige Materialien. Andersartige geeignete Gleitlacke können ebenfalls zum Einsatz gebracht werden.

In dieser Gleitlackschicht können enenfalls Festschmierstoffe, wie beispielsweise Molybdändisulfid, Titanoxid, Bornitrid oder dergleichen eingebracht sein.

Durch den Erfindungsgegenstand wird eine Optimierung der tribologischen Betriebseigenschaften durch Einsatz von reibungs- und verschleißreduzierenden Gleitlacksystemen in Verbindung mit thermisch gespritzten Schichtwerkstoffen realisiert. Aufgrund der guten tribologischen Eigenschaften können nun weit höhere Betriebsbelastungen (z.B. höhere Drehzahlen Mangelschmierung usw.) als bisher realisiert werden. Eine Schmierung des Dichtbereiches kann in der Regel unterbleiben.

Des weiteren kann einen Kostenreduzierung durch den Einsatz von preiswerten Grundwerkstoffen (Gußeisen bzw. Leichtmetalle), anstatt der bisher eingesetzten hochfesten carbidhaltigen Gußwerkstoffe herbeigeführt werden. Zusätzlich kann auf die aktuelle kostenintensive Bearbeitung der Laufoberfläche (Trapezschleifen oder Honen) komplett verzichtet werden. Darüber hinaus ist keine Nachbearbeitung (Schleifen/Polieren) der thermisch gespritzten Hartstoffschicht nötig. Die notwendige Dichtheit der Laufoberfläche der Laufwerkdichtung wird am Anfang durch die relativ weiche Gleitlackschicht realisiert. Bei stetigem Abtrag der Gleitlackschicht läuft sich die thermisch gespritzte Hartstoffschicht im Betrieb ein.

Die Hartstoffschicht kann durch bekannte thermische Spritzverfahren (APS, HVOF, Lichtbogendraht, Drahtflamm oder Pulverflamm) auf die Lauffläche aufgebracht werden.

Der Erfindungsgegenstand ist anhand eines Ausführungsbeispieles in der Zeichnung dargestellt und wird wie folgt beschrieben. Es zeigen:
Figur 1 Beispiel einer Laufwerkdichtung;
Figur 2 Darstellung des Gleitringes gemäß Figur 1, beinhaltend eine verschleißbeständige versiegelte Hartstoffschicht.

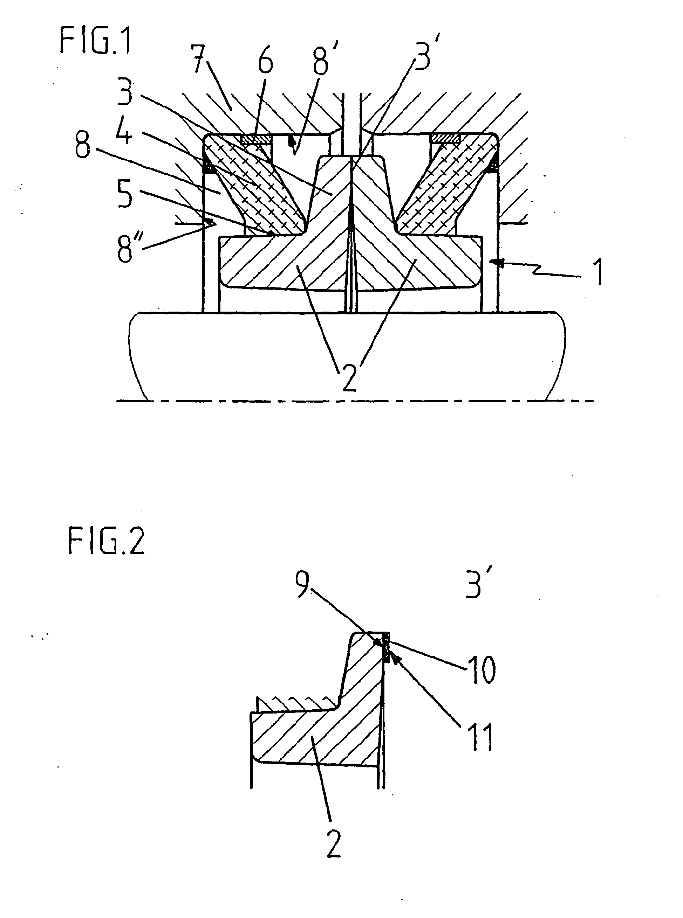

Figur 1 zeigt eine Laufwerkdichtung 1, in diesem Beispiel bestehend auf zwei geometrisch gleichbauenden Gleit- oder Gegenringen 2, so dass im folgenden nur noch von einem Gleitring 2 die Rede ist. Der Gleitring 2 weist einen winkelförmigen Querschnitt auf. Die Dichtschenkel 3 der Gleitringe 2 erzeugen eine dynamische Dichtstelle 3'. Zur Aufnahme eines im Querschnitt trapezförmigen Dichtkörpers 4 weist der Gleitring 2 eine zylindrische Umfangsfläche 5 auf. Der Dichtkörper 4 besitzt eine Sekundärdichtung 6. Der mit dem Dichtkörper 4/6 bestückte Gleitring 2 wird in das abzudichtende Laufwerkelement 7 axial dergestalt eingebracht, dass er in axialer Richtung mittels eines Werkzeuges (nicht dargestellt) in die dort vorgesehene Bohrung 8 eingepreßt wird, ohne dass ein Verkeilen in der Bohrung 8 auftreten kann. Der Dichtkörper 4 stützt sich innerhalb der Bohrung 8 sowohl an einer radialen 8' als auch an einer axialen Fläche 8" des Laufwerkelementes 7 ab.

Figur 2 zeigt als Teildarstellung einen Gleitring 2 gemäß Figur 1. Erkennbar ist die dynamische Dichtstelle 3', gebildet durch eine Lauffläche 9, auf welche eine in diesem Beispiel aus Oxydkeramik bestehende Hartstoffschicht 10 durch thermisches Spritzen aufgebracht ist. Die Oberfläche 11 der thermisch gespritzten Schicht 10 wird anschließend durch eine, in diesem Beispiel PTFE-haltige Gleitlackschicht, in der Festschmierstoffe, beispielsweise auf Basis von Molybdändisulfid, eingebettet sind, versiegelt. Durch Ausgestaltung dieser mit einer Versiegelung versehenen thermisch gespritzten Hartstoffschicht 10 sind keine Nachbearbeitungen, wie Schleifen, Polieren oder dergleichen, der thermisch gespritzten Hartstoffschicht mehr notwendig. Bei stetigem Abtrag der Gleitlackschicht läuft sich die thermisch gespritzte Hartstoffschicht 10 im Betrieb ein.

## Patentansprüche

1. Laufwerkdichtung, bestehend aus einem metallischen Gleit- und/oder Gegenring (2), der im Bereich seiner Lauffläche (9) mit einer Verschleißschutzschicht (10) versehen ist, die durch eine thermisch aufgespritzte Hartstoffschicht gebildet ist, und die Hartstoffschicht (10) Oxydkeramiken, Cermets und/oder Hartmetalle beinhaltet **dadurch gekennzeichnet, dass** der Gleit- und/oder Gegenring (2) aus Gußeisen oder einem Leichtmetall besteht und die Hartstoffschicht (10) mit einer weicheren Gleitlackschicht überzogen ist, die Festschmierstoffe beinhaltet.

2. Laufwerkdichtung nach Anspruch 2, **dadurch gekennzeichnet, dass** die Gleitlackschicht PTFE, Graphit oder dergleichen Materialien beinhaltet.

3. Laufwerkdichtung nach einem der Ansprüche 1 bis 2, **dadurch gekennzeichnet, dass** die Festschmierstoffe durch Molybdändisulfid, Titanoxid, Bornitrid oder dergleichen gebildet sind.

## Claims

1. Drive seal, comprising a metallic sliding and/or counter-ring (2) which is provided in the region of its running surface (9) with an antiabrasion layer (10) which is formed by a thermally sprayed-on hard material layer, and the hard material layer (10) contains oxide ceramics, cermets and/or hard metals, **characterised in that** the sliding and/or counter-ring (2) comprises cast iron or a light metal and the hard material layer (10) is coated with a softer antifriction varnish layer which contains solid lubricants

2. Drive seal according to claim 2, **characterised in that** the antifriction varnish layer contains PTFE, graphite or similar materials.

3. Drive seal according to one of the claims 1 to 3, **characterised in that** the solid lubricants are formed from molybdenum disulphide, titanium oxide, boron nitride or the like.

## Revendications

1. Joint d'étanchéité pour mécanisme de roulement, constitué d'un anneau de glissement et/ou contre-anneau métallique (2), qui est doté dans la zone de sa surface de roulement (9) d'une couche de protection contre l'usure (10), qui est formée par une couche de matière dure pulvérisée à chaud, la couche de matière dure (10) contenant des céramiques oxydes, cermets et/ou métaux durs, **caractérisé en ce que** l'anneau de glissement et/ou contre-anneau (2) se compose de fonte de fer ou d'un métal léger et la couche de matière dure (10) est revêtue d'une couche de laque de glissement plus molle, qui comprend des lubrifiants solides.

2. Joint d'étanchéité pour mécanisme de roulement selon la revendication 1, **caractérisé en ce que** la couche de laque de glissement comprend du PTFE, du graphite ou des matériaux similaires.

3. Joint d'étanchéité pour mécanisme de roulement selon l'une des revendications 1 à 2, **caractérisé en ce que** les lubrifiants solides sont formés par du disulfure de molybdène, de l'oxyde de titane, du nitrure de bore ou similaires.
